# EUROPÄISCHE PATENTSCHRIFT

(11) **EP 2 216 151 B1**
(45) Veröffentlichungstag und Bekanntmachung des Hinweises auf die Patenterteilung: **12.04.2017**
(21) Anmeldenummer: 10000481.1
(22) Anmeldetag: 19.01.2010
(51) Int. Cl.: B28C 5/42, B60P 3/16

(54) **Trommelantrieb für einen Fahrmischer**
Drum drive for a mixer truck
Entraînement de tambour pour une bétonnière

(30) Priorität: 05.02.2009 DE 202009001416 U
(43) Veröffentlichungstag der Anmeldung: 11.08.2010
(73) Patentinhaber: Liebherr-Mischtechnik GmbH, 88427 Bad Schussenried (DE)
(72) Erfinder: Zenne, Gerhard, 88525 Dürmentingen (DE)
(74) Vertreter: Laufhütte, Dieter

(56) Entgegenhaltungen:
- DE-A1- 3 026 279
- GB-A- 1 349 462
- JP-A- 2003 226 192
- US-A- 4 390 282
- US-A1- 2003 158 638
- US-A1- 2007 155 552
- US-A1- 2007 263 478

## Beschreibung

Die Erfindung betrifft einen Fahrmischer mit einem Fahrzeugantriebsstrang und einem Trommelantriebsstrang für einen Fahrmischer nach dem Oberbegriff des Anspruchs 1.

Fahrmischer sind fahrbare Betonmischer, die Frischbeton zur Baustelle transportieren. Dazu wird der Beton in einer sich drehenden Trommel befördert um ein Entmischen oder gar ein zu frühes Abbinden des Betons zu verhindern.

Nach dem Stand der Technik erfolgt der Antrieb der Mischtrommel über einen Hydraulikantrieb. Der Hydraulikantrieb besteht üblicherweise aus einer Hydraulikpumpe, die entweder an Fahrzeugantrieb des Fahrmischers angeflanscht ist oder durch einen Separatmotor versorgt wird und über hydraulische Leitungen mit einem Hydraulikmotor zum Antrieb der Trommel verbunden ist. Um den bekannten Problemen von hydraulischen Antrieben, wie zum Beispiel Druck und Bewegungsschwingungen hervorgerufen durch die Elastizität des Fluids, Entwicklung von Wärme und dadurch Änderung der Viskosität der Hydraulikflüssigkeit, Leckölverluste, zu entgehen, ist es Aufgabe der vorliegenden Erfindung, einen alternativen Antrieb für die Mischtrommel eines Fahrmischers an die Hand zu geben.

Erfindungsgemäß wird diese Aufgabe durch die Kombination der Merkmale des Anspruchs 1 gelöst. Demnach ist ein Fahrmischer mit einem Fahrzeugantriebsstrang vorgesehen, wobei der Fahrmischer einen Verbrennungsmotor, insbesondere Dieselmotor, und einen Trommelantriebsstrang zum Antrieb einer Mischtrommel aufweist, wobei der Trommelantriebsstrang mehr als einen Elektromotor zum Antrieb der Mischtrommel umfasst. Anhand des Elektromotors wird die Mischtrommel in einer rotierenden Bewegung angetrieben, wobei die Rotationsgeschwindigkeit durch die Elektromotordrehzahl regelbar ist. Erfindungsgemäß ist vorgesehen, die Mischtrommel mit mehr als einem Elektromotor anzutreiben, wobei die einzelnen Elektromotoren in ihrer Drehzahl miteinander synchronisiert sind. Der Trommelantriebsstrang umfasst ferner einen Generator, wobei der Generator die Elektromotoren mit elektrischer Energie speist.

Bevorzugte Ausgestaltungen der Erfindung ergeben sich aus den sich an den Hauptanspruch anschließenden Unteransprüchen.

Demnach ist die Antriebsenergie des Elektromotors über eine zusätzlich montierte Energiequelle bereitstellbar. Die Energiequelle stellt dabei die benötigte elektrische Energie des Elektromotors für einen reibungslosen Betrieb der Mischtrommel zur Verfügung.

Hierbei dient ein Generator als Energiequelle. Der Generator setzt die an seiner mechanischen Welle geleistete Bewegungs- bzw. mechanische Energie in elektrische Energie um und versorgt den Elektromotor des Trommelantriebs über elektrische Leitungen mit ausreichender Energie zum Betrieb der Mischtrommel.

Der Generator ist über einen Separatmotor antreibbar. Die Antriebswelle des Separatmotors ist dabei an die mechanische Welle des Generators angeflanscht. Durch die Rotationsbewegung der Antriebswelle des Separatmotors wird nun im Generator elektrische Energie erzeugt, die an den Elektromotor des Trommelantriebs weitergegeben wird. Der Separatmotor ist auf der Oberseite des Fahrmischerfahrwerks zwischen Fahrerkabine und Mischtrommel angeordnet.

Bevorzugt wird ein Dieselmotor als Separatmotor eingesetzt.

Zwischen Separatmotor und Generator ist eine Gelenkwelle angeordnet.

Durch den Einsatz einer Gelenkwelle müssen die Drehachsen von Generatorwelle und Separatmotorwelle nicht fluchtend zueinander liegen. Ebenfalls kann eine Übertragung des Drehmoments von Separatmotorwelle auf Generatorwelle erfolgen, falls der Generator ein dem Separatmotor entgegengerichtetes Drehmoment erfordert.

Gemäß einer anderen vorteilhaften Ausgestaltung, die nicht Teil der Erfindung ist, ist der Generator über den Fahrzeugantriebsstrang antreibbar. Die mechanische Bewegung der Generatorwelle zur Erzeugung elektrischer Energie wird dabei vom Antriebsstrang des Mischfahrzeugs bereitgestellt. Üblicherweise wird der Generator des Mischerantriebs am Nebenabtrieb des LKW-Motors, üblicherweise eines Verbrennungsmotors angeflanscht.

Vorteilhafterweise ist der Generator zwischen Fahrzeugmotor und LKW-Getriebe des Fahrzeugantriebsstrangs angeordnet.

In weiterhin vorteilhafter Weise ist zwischen der Energiequelle und dem Elektromotor eine Steuerung angeordnet. Die Steuerung dient hierbei zur elektrischen Regelung der Drehzahl des Elektromotors und somit der Dreh- bzw. Mischleistung der Mischtrommel. Der Fahrer kann dem entsprechend durch eine mechanische Hebelbedienung bzw. elektrische Bedienung der Steuerung die Drehbewegung der Mischertrommel des Fahrmischers steuern. Das Bedienfeld zur Steuerung des Elektromotors kann innerhalb der Fahrerkabine angeordnet sein und ermöglicht dem Fahrer somit eine bequeme Trommeldrehzahlregelung. Weiterhin kann jedoch auch außerhalb am Fahrzeug ein weiteres Bedienfeld angebracht sein. Denkbar ist ebenfalls eine automatisierte Drehzahlregelung der Mischtrommel.

Vorzugsweise ist der Elektromotor über ein Mischergetriebe mit der Mischtrommel verbunden. Das eingesetzte Mischergetriebe dient zur Wandlung der Drehzahl bzw. zur Wandlung des Drehmoments des Elektromotors bei der Übertragung zur Mischtrommel.

Weitere Merkmale, Einzelheiten und Vorteile der Erfindung werden anhand von Zeichnungen und Ausführungsbeispielen näher erläutert. Es zeigen:
- Figur 1:: einen Fahrmischer nach dem Stand der Technik,
- Figur 2:: einen Fahrmischer nach dem Stand der Technik mit einem Separatmotor,
- Figur 3:: ein Schemabild eines erfindungsgemäßen Trommelantriebs mit einem Separatmotor und
- Figur 4:: ein Schemabild eines Trommelantriebs, der an den Fahrzeugantriebsstrang gekoppelt ist.

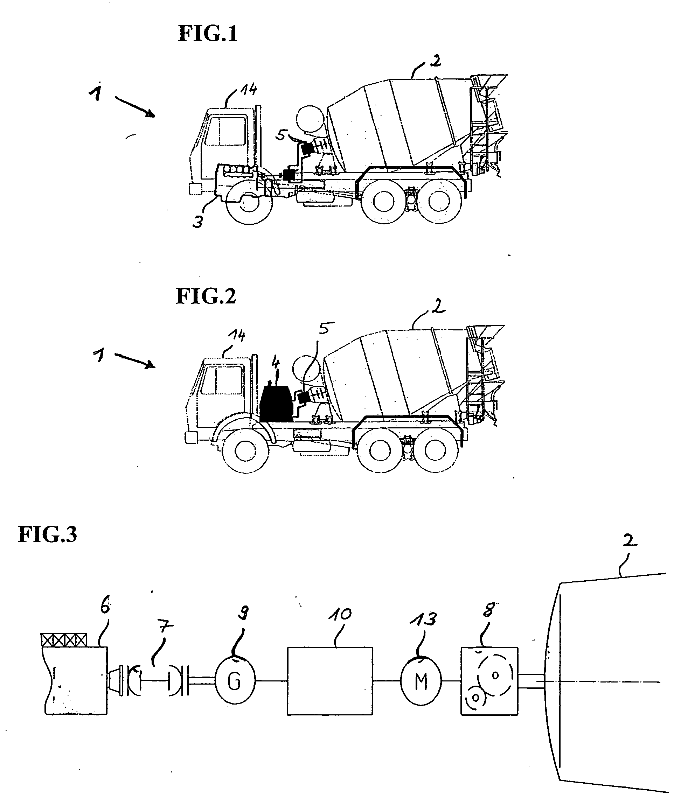

In Figur 1 ist ein bauüblicher Fahrmischer 1 mit einem Trommelantrieb nach dem Stand der Technik dargestellt, der neben dem dargestellten Antriebsstrang 3, welcher einen Fahrmotor 12 umfaßt, eine hydraulisch angetriebene Mischtrommel 2 aufweist. Die Mischtrommel 2 wird in bekannter Art und Weise über einen hydraulischen Trommelantrieb angetrieben. Die Hydraulikpumpe dieses hydraulischen Trommelantriebs ist am Nebenabtrieb des den Fahrmischer antreibenden Fahrzeugantriebsstrang 3 angeflanscht. Weiterhin ist die hydraulische Pumpe über einen Hydraulikkreislauf mit einem hydraulischen Motor 5 verbunden, der seine Bewegungsarbeit auf die Mischtrommel 2 überträgt und diese somit in eine Rotationsbewegung versetzt.

Figur 2 zeigt eine alternative Umsetzung eines Mischtrommelantriebs nach dem stand der Technik. Die Hydraulikpumpe wird hierbei nicht über den Fahrzeugantrieb gespeist, sondern über einen zwischen Fahrerkabine 14 und Mischtrommel 2 befestigten Separatmotor 4 angetrieben.

In Figur 3 ist eine Ausführungsvariante der Erfindung in einem Schemabild dargestellt. So ist bei dem erfindungsgemäßen Trommelantrieb ein Generator 5 vorgesehen, der die geleistete mechanische Arbeit an seiner mechanischen Welle in elektrische Energie umsetzt. Die Arbeit wird durch einen über eine Gelenkwelle 7 gekoppelten Antrieb 6 verrichtet. In der dargestellten Ausführungsvariante basiert der Antrieb 6 auf einem Separatmotor, welcher beispielsweise zwischen Fahrerkabine 14 und Mischtrommel 2 auf dem Fahrgestell des Fahrmischers 1 angeordnet sein kann. Häufig wird der Separatmotor als Dieselaggregat ausgelegt, der unabhängig vom Fahrzeugmotor des Fahrmischers 1 betrieben werden kann.

Die Ausführungsvariante nach dem Schemabild aus Figur 3 zeigt ebenfalls einen Elektromotor 13, der von besagtem Generator 9 mit elektrischer Energie gespeist wird. Zwischen Generator 9 und Elektromotor 13 kann eine Steuerung 10 angeordnet sein, die die Zuführung der elektrischen Energie vom Generator 9 her steuert und damit die erforderliche Drehzahl des Elektromotors 13 zum Betrieb der Mischtrommel 2 regelt. Dabei kann die Steuerung 10 durch ein Bedienfeld vom Fahrer betätigt werden, wobei das Bedienfeld entweder innerhalb der Fahrerkabine 14 oder außerhalb am Fahrzeug angebracht ist. Zur Übersetzung der Drehzahl des Elektromotors 13 auf die Antriebswelle der Mischtrommel 2 wird ein Mischergetriebe 8 eingesetzt, welches zwischen Elektromotor 13 und Mischtrommel 2 angeordnet ist.

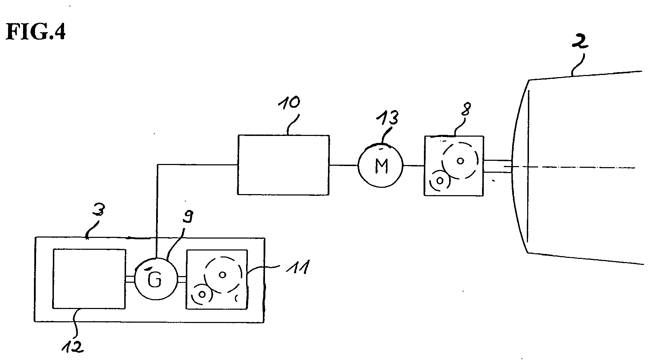

Eine modifizierte Ausführungsvariante, die nicht Teil der Erfindung ist, ergibt sich aus der Darstellung gemäß Figur 4. Dort wird auf den gesonderten Antrieb 6 der Figur 3 verzichtet, statt dessen ist der Generator 9 an den Fahrzeugantriebsstrang 3 des Fahrmischers 1 gekoppelt. Der Generator 9 wird bevorzugt zwischen dem Fahrmotor 12 und dem LKW-Getriebe 11 des Fahrmischers 1 angeordnet. Dabei wird die mechanische Welle des Generators 9 an einen Nebenabtrieb des Fahrmotors 12 angeflanscht und somit die mechanische Arbeit des Fahrmotors 12 auf den Generator 9 übertragen und in elektrische Energie umgewandelt. Wie im Ausführungsbeispiel aus Figur 3 wird der Generator 9 ebenfalls über eine Steuerung 10 mit einem Elektromotor 13 verbunden, wobei dieser wiederum über ein Mischergetriebe 8 mit der Mischtrommel 2 des Fahrmischers 1 verbunden ist und sein Ausgangsdrehmoment auf die Mischtrommel 2 überträgt. Die Steuerung 10 dient ebenfalls zur Regulierung der Zuführung der elektrischen Energie vom Generator 9 zum Elektromotor 13.

Optional kann sowohl bei der Ausführungsvariante aus Figur 3 sowie der modifizierten Ausführungsvariante, die nicht Teil der Erfindung ist, aus Figur 4 auf den Einsatz eines Mischergetriebes 8 verzichtet werden.

## Patentansprüche

1. Fahrmischer (1) mit einem Fahrzeugantriebsstrang (3), der einen Verbrennungsmotor (12), insbesondere Dieselmotor aufweist, und einem Trommelantriebsstrang zum Antrieb einer Mischtrommel (2), wobei der Trommelantriebsstrang wenigstens einen Elektromotor (13) zum Antrieb der Mischtrommel (2) und einen Generator (9) umfasst, wobei der Generator (9) den Elektromotor (13) mit elektrischer Energie speist, **dadurch gekennzeichnet, dass** der Generator (9) über eine Separatmotor (6) antreibbar ist, wobei zwischen Separatmotor (6) und Generator (9) eine Gelenkwelle angeordnet ist.

2. Fahrmischer (1) gemäß Anspruch 1, **dadurch gekennzeichnet, daß** der Separatmotor (6) ein Dieselmotor ist.

3. Fahrmischer (1) gemäß einem der vorangegangenen Ansprüche, **dadurch gekennzeichnet, daß** zwischen Generator (9) und Elektromotor (13) eine Steuerung (10) angeordnet ist.

4. Fahrmischer (1) gemäß einem der vorangegangenen Ansprüche, **dadurch gekennzeichnet, daß** der Elektromotor (13) über ein Mischergetriebe (8) mit der Mischtrommel (2) verbunden ist.

## Claims

1. A truck mixer (1) with a vehicle drive train (3), which includes an internal combustion engine (12), in particular a Diesel engine, and a drum drive train for driving a mixing drum (2), wherein the drum drive train comprises at least one electric motor (13) for driving the mixing drum (2) and a generator (9), wherein the generator (9) feeds the electric motor (13) with electric energy, **characterized in that** the generator (9) can be driven via a separate engine (6), wherein between separate engine (6) and generator (9) an articulated shaft is arranged.

2. The truck mixer (1) according to claim 1, **characterized in that** the separate engine (6) is a Diesel engine.

3. The truck mixer (1) according to any of the preceding claims, **characterized in that** between generator (9) and electric motor (13) a controller (10) is arranged.

4. The truck mixer (1) according to any of the preceding claims, **characterized in that** the electric motor (13) is connected with the mixing drum (2) via a mixer transmission (8).

## Revendications

1. Mélangeur mobile (1) avec un train d'entraînement de véhicule (3), qui comprend un moteur à combustion interne (12), en particulier un moteur Diesel, et un train d'entraînement de tambour pour l'entraînement d'un tambour mélangeur (2), dans lequel le train d'entraînement de tambour comporte au moins un moteur électrique (13) pour l'entraînement du tambour mélangeur (2) et un générateur (9), le générateur (9) alimentant le moteur électrique (13) en énergie électrique, **caractérisé en ce que** le générateur (9) peut être entraîné par un moteur séparé (6), un arbre articulé étant agencé entre moteur séparé (6) et générateur (9).

2. Mélangeur mobile (1) selon la revendication 1, **caractérisé en ce que** le moteur séparé (6) est un moteur Diesel.

3. Mélangeur mobile (1) selon l'une quelconque des revendications précédentes, **caractérisé en ce qu'**une unité de commande (10) est agencée entre générateur (9) et moteur électrique (13).

4. Mélangeur mobile (1) selon l'une quelconque des revendications précédentes, **caractérisé en ce que** le moteur électrique (13) est relié au tambour mélangeur (2) par une transmission de mélangeur (8).
